# EUROPÄISCHE PATENTANMELDUNG

(11) **EP 1 122 633 A2**
(43) Veröffentlichungstag der Anmeldung: **08.08.2001**
(21) Anmeldenummer: 01101042.8
(22) Anmeldetag: 18.01.2001
(51) Int. Cl.: G06F 3/033

(54) **Vorrichtung zur Steuerung einer Bildschirmanzeige**

(30) Priorität: 02.02.2000 DE 10004500
(71) Anmelder: Bayerische Motoren Werke Aktiengesellschaft, 80809 München (DE)
(72) Erfinder: Künzner, Hermann, 85356 Freising (DE)

(57) **Zusammenfassung**

Die Erfindung betrifft eine Vorrichtung zur Steuerung einer Bildschirmanzeige mit einem Betätigungsglied, welches eine Ausgangslage besitzt und gegen die Wirkung eines elastischen Elements eine Bewegung in zumindest zwei Freiheitgraden durchführen kann sowie um eine Längsachse drehbar und in Richtung der Längsachse bewegbar ist.

Zur schnelleren Anwahl von Menüpunkten ist es vorgesehen, bei der Bewegung des Betätigungsgliedes in Richtung eines der zwei Freiheitsgrade einen in einem Randbereich einer Bildschirmanzeige fortwährend angeordneten und einem Punkt einer Menüstruktur zugeordneten Hauptmenüpunkt auszuwählen, wobei durch die Auswahl eines Hauptmenüpunktes ein diesem Feld zugeordnetes, innerhalb der Menüstruktur untergeordnetes Teilmenü in dem vom Randbereich umfaßten Mittenbereich der Bildschirmanzeige erscheint, und dem Benutzer die Möglichkeit zu geben, jeden Menüpunkt in den untergeordneten Teilmenüs jeweils durch eine Kombination von Bewegungen und Drehungen, umfassend jedoch wenigstens eine Bewegung in Richtung eines der zumindest zwei Freiheitsgrade, anzufahren und als optisch hervorgehobenes Feld in der Bildschirmanzeige darzustellen sowie einen beliebigen Hauptmenüpunkt in jeder Menüposition durch ein- oder mehrmaliges Betätigen des Betätigungsgliedes in eine bestimmte Richtung eines der zumindest zwei Freiheitsgrade auszuwählen.

## Beschreibung

Die Erfindung betrifft eine Vorrichtung zur Steuerung einer Bildschirmanzeige mit einem Betätigungsglied, welches eine Ausgangslage besitzt und demgegenüber gegen die Wirkung eines elastischen Elements eine Bewegung in zumindest zwei Freiheitsgraden durchführen kann sowie um eine Längsachse drehbar und in Richtung der Längsachse bewegbar ist.

Derartige Vorrichtungen sind aus der EP 0 796 766 A2 sowie der DE 197 52 056 A1 bekannt. In der EP 0 796 766 A2 dient ein Betätigungsglied dazu, die Anzahl der Ebenen innerhalb der Menüstruktur zu vergrößern. Dabei werden die Ebenen über den Umfang der Bildschirmanzeige verteilt angeordnet. Je nach Menüausgestaltung müssen jedoch verschieden konstruktiv ausgestaltete Betätigungsglieder vorgesehen sein, da die Zahl der Ebenen und die in diesen Ebenen angeordneten Kontaktelemente der Zahl der auswählbaren Menüs und/oder Funktionen jeweils angepaßt ist.

Zwar kann gemäß dieser Multifunktions-Bedieneinrichtung die Auswahl von Menüpunkten durch eine Querbetätigung des Betätigungsgliedes erfolgen. Doch durch die Zuordnung der Kontaktstellen eines Betätigungsgliedes zu einzelnen Menüpunkten und/oder Funktionsebenen erhält man eine sehr eingeschränkte Flexibilität.

Aus der DE 197 52 056 A1 ist eine Vorrichtung zur Steuerung einer Bildschirmanzeige bekannt, bei der durch Bewegen des Betätigungsglieds in eine von zwei Freiheitsgraden ein Hauptmenüpunkt am Rand der Bildschirmanzeige auswählbar ist. Die Auswahl von einem solchen Hauptmenüpunkt untergeordneten Menüpunkten, die im Mittenbereich der Bildschirmanzeige angezeigt werden, erfolgt dann jedoch mittels einer Dreh-/Längsbewegung. Vorteilhaft bei dieser Ausführungsform ist zwar der schnelle Wechsel zwischen den einzelnen Hauptmenüs. Innerhalb der Hauptmenüs wird jedoch ausschließlich durch die Drehbewegung ausgewählt, wodurch sich die Bedienung der Untermenüs relativ langsam gestaltet.

Aufgabe der vorliegenden Erfindung ist eine Verbesserung der gerade genannten Vorrichtung zur Steuerung einer Bildschirmanzeige, so dass auch innerhalb der Hauptmenüs eine schnelle Bedienung möglich ist.

Diese Aufgabe wird durch die im Anspruch 1 angegebenen Merkmale gelöst.

Gegenüber der DE 197 52 056 A1 besteht ein wesentliches Element der Erfindung darin, daß auch innerhalb der Hauptmenüs eine Auswahl von Menüpunkten (also: Untermenüpunkte) durch eine Kombination von Bewegungen und Drehungen erfolgt, wobei mindestens eine Bewegung in Richtung eines der zumindest zwei Freiheitsgrade umfaßt sein muß. Jeder Menüpunkt läßt sich somit durch eine bestimmte Kombination von Bewegungen in Richtung der vorgegebenen Freiheitsgraden und Drehungen anwählen, wobei der angewählte Menüpunkt in der Bildschirmanzeige jeweils hervorgehoben ist. Darüber hinaus kann man von jedem Menüpunkt schnell in ein anderes Hauptmenü wechseln, und zwar - je nach Ausgestaltung des Bedienelements - durch ein- oder mehrmaliges Betätigen des Betätigungsgliedes in eine bestimmte Richtung eines der zumindest zwei Freiheitsgrade, insbesondere in Richtung des entsprechenden Hauptmenüpunktes.

Eine Auswahl einer Funktion oder eines Funktionswertes kann durch Betrieb des Betätigungsglieds in dessen Längsrichtung erfolgen. Der Betrieb des Betätigungsgliedes in Längsrichtung definiert somit die Eingabefunktion.

Sehr hilfreich ist es, wenn sowohl der aktive Hauptmenüpunkt als auch der gerade aktive und im Mittenbereich angezeigte Untermenüpunkt hervorgehoben sind. Damit kann man zum einen die gerade aktiven Funktionen überblicken. Zum anderen läßt sich überprüfen, ob die mittels eines Cursors angefahrenen und angewählten Menüpunkte aktiviert worden sind.

Bei einer konkreten Anwendung wird man damit zunächst durch eine Bewegung des Betätigungsgliedes in Richtung eines der vorgegebenen Freiheitsgrade einen Menüpunkt aus dem Hauptmenü auswählen, wodurch ein dazugehöriges Untermenü im Mittenbereich des Bildschirms erscheint. Dabei sind im Mittenbereich nur die Teilmenüs, die Funktionen bzw. Funktionswerte angeordnet, die zu dem gerade angewählten Hauptmenüpunkt gehören. Die Hauptmenüpunkte sind weiter im Randbereich der Bildschirmanzeige angeordnet und der aktive Hauptmenüpunkt ist
- vorzugsweise - in hervorgehobener Weise dargestellt.

Die vorliegende Erfindung wird anhand von zwei Ausführungsbeispielen und den beiliegenden Zeichnungen näher erläutert. Die Zeichnungen zeigen in
- Fig. 1: eine Bildschirmanzeige, die im Rahmen der erfindungsgemäßen Vorrichtung verwendet wird,
- Fig. 2: die Bildschirmanzeige aus Fig. 1 mit aufgerufenem Untermenüpunkt und
- Fig. 3a - 3d: weitere Bildschirmanzeigen gemäß einer weiteren Ausführungsform der vorliegenden Erfindung.

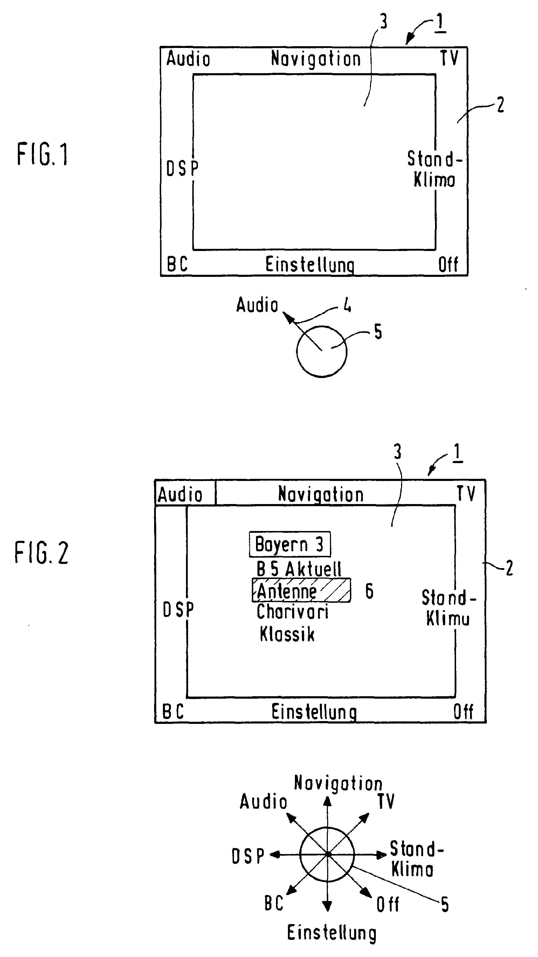

In Fig. 1 ist die im Rahmen der vorliegenden Erfindung vorgesehene Bildschirmanzeige prinziphaft dargestellt. Innerhalb einer Anzeigefläche 1, die gleich der Bildfläche eines Bildschirmes entspricht, befindet sich ein Randbereich 2 und ein Mittenbereich 3. Im Randbereich 2 sind an acht Stellen, die bezogen auf den Mittelpunkt der Anzeigefläche 1 in etwa jeweils um 45° gegeneinander versetzt sind, acht Symbole für die mit einem Betätigungsglied 5 anzusteuernden Hauptmenüpunkte dargestellt. Es handelt sich hierbei um die Hauptmenüpunkte Audio, Navigation, Fernsehen, Stand-Klima, Off, Einstellung, Bordcomputer und DSP.

Im Hauptmenüpunkt "Einstellung" können allgemein Funktionen bzw. Funktionswerte für ein Fahrzeug eingestellt werden. "Off" steht für die Möglichkeit, die Bildschirmanzeige abzuschalten.

Das Betätigungsglied 5 ist vorliegend in vier Freiheitsgrade, die entsprechend den Hauptmenüpunkten im Randbereich 2 der Anzeigefläche 1 angeordnet sind (vgl. Pfeile in Fig. 2), jeweils in zwei Richtungen verschiebbar und befindet sich im nicht betätigten Zustand in einer Ausgangslage, gegenüber der es gegen die Wirkung einer Rückstellfeder verschwenkbar ist.

Auf Verschwenkmechanismen wird vorliegend nicht eingegangen, da sie allgemein bekannt sind (vgl. EP 0 796 766 A2).

Beim Einschalten eines Fahrzeugs erscheint nun zunächst das Hauptmenü mit den in Fig. 1 dargestellten Hauptmenüpunkten. Durch Betätigung des Betätigungsgliedes 5 kann ein der Betätigungsrichtung zugeordneter Hauptmenüpunkt aufgerufen werden. In Fig. 1 wird das Betätigungsglied 5 schräg nach oben bewegt (Pfeil 4), wodurch der Hauptmenüpunkt "Audio" aktiviert wird. Die Aktivierung wird durch eine Hervorhebung des Hauptmenüpunktes "Audio" kenntlich gemacht, was in Fig. 2 dargestellt ist. Zudem erscheint im Mittenbereich 3 der Anzeigefläche 1 das dem Hauptmenüpunkt "Audio" zugeordnete Untermenü. Vorliegend ist die Auswahl von verschiedenen Sendern (Bayern3, B5 Aktuell, Antenne, Charivari und Klassik) möglich, wobei in Fig. 2 der Sender "Bayern3" ausgewählt ist, ein Cursor 6 jedoch auf "Antenne" steht. Durch Betätigen des Betätigungsglieds 5 in Längsrichtung seiner Drehachse kann nun als neuer Sender der Sendekanal "Antenne" ausgewählt werden.

Bewegt man vor einer Auswahl das Betätigungsglied 5 nach oben oder unten, so kann der Cursor 6 auf andere Sender gestellt werden.

Wird der Cursor 6 auf der Position "Bayern3" stehend nach oben bewegt, so kommt man in den Hauptmenüpunkt "Navigation". Wird hingegen der Cursor 6 auf den Menüpunkt "Klassik" stehend nach unten bewegt, so kommt man zu dem Hauptmenüpunkt "Einstellung". Wird der Cursor 6 durch Betätigung des Betätigungsglieds 5 in eine der übrigen Richtungen bewegt, so kommt man sofort zu einem der anderen Hauptmenüpunkte (TV, Stand-Klima, Off, PC oder DSP).

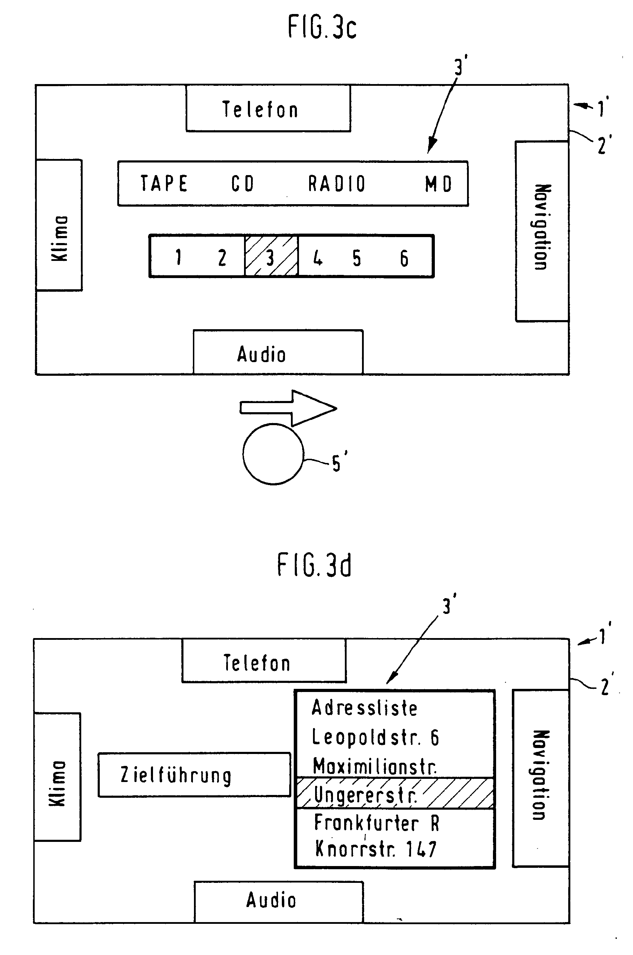

Eine weitere Ausführungsform der Erfindung ist anhand der Fig. 3a bis 3d dargestellt. Dabei sind alle entsprechenden Merkmale und Elemente mit Apostroph gekennzeichnet. Gemäß der zweiten Ausführungsvariante läßt sich ein Betätigungsglied 5' nur in zwei Freiheitsgraden jeweils in zwei Richtungen bewegen, die senkrecht zueinander angeordnet sind. Entsprechend sind nur vier Hauptmenüpunkte "Telefon", "Navigation", "Audio" und "Klima" in einem Randbereich 2' einer Anzeigefläche 1' angeordnet. Die Auswahl der verschiedenen Menüpunkt erfolgt nun analog zu derjenigen in den Fig. 1 und 2. Erfindungsgemäß wird die Bewegungsfunktion des Betätigungsglieds 5 in Richtung eines der zwei Freiheitsgrade auch für den Wechsel in Untermenüs verwendet. Gemäß Fig. 3a ist bereits der Hauptmenüpunkt "Audio" aufgerufen, was durch seine Hervorhebung markiert ist. Durch die Auswahl des Hauptmenüpunkts "Audio" wird das dazugehörige Untermenü im Mittenbereich 3' der Anzeigefläche 1' angezeigt. Vorliegend umfaßt das Untermenü die Angaben "Tape", "CD", "Radio" und "MD". Dabei ist der Menüpunkt "Tape" momentan aktiv, was durch Hervorhebung des Wortes "Tape" angezeigt wird. Ein Cursor 6' hingegen steht auf dem Menüpunkt "CD". Weiterhin ist das gerade beschriebene Untermenü in der Anzeigefläche 1' als aktiv gekennzeichnet.

Zu dem momentan aktiven Untermenüpunkt "Tape" wird ferner ein weiteres Untermenü ("Seite 1", "Seite 2") angezeigt. Auch in diesem Untermenü wird die momentan aktive Seite (hier: Seite 1) hervorgehoben. Dem Bediener ist somit sofort klar, daß der Hauptmenüpunkt "Audio" ausgewählt ist, wobei das Kassettenabspielgerät "Tape" aktiv ist und eine Seite 1 abspielt.

Der Cursor 6' in Fig. 3a steht auf dem Untermenüpunkt "CD". Durch Drücken des Betätigungsglieds 5' wird nun der CD-Player aktiviert. Dabei wird der Menüpunkt "CD" hervorgehoben. Die Hervorhebung des Menüpunkts "Tape" erlischt. Gleichzeitig zur Aktivierung des Menüpunkts "CD" erscheint das dazugehörige Untermenü mit den Angaben (hier: Zahlen 1 bis 6), welche einzelne CDs in einem CD-Wechsler bezeichnen. Die CD 3 ist momentan als aktive CD angezeigt.

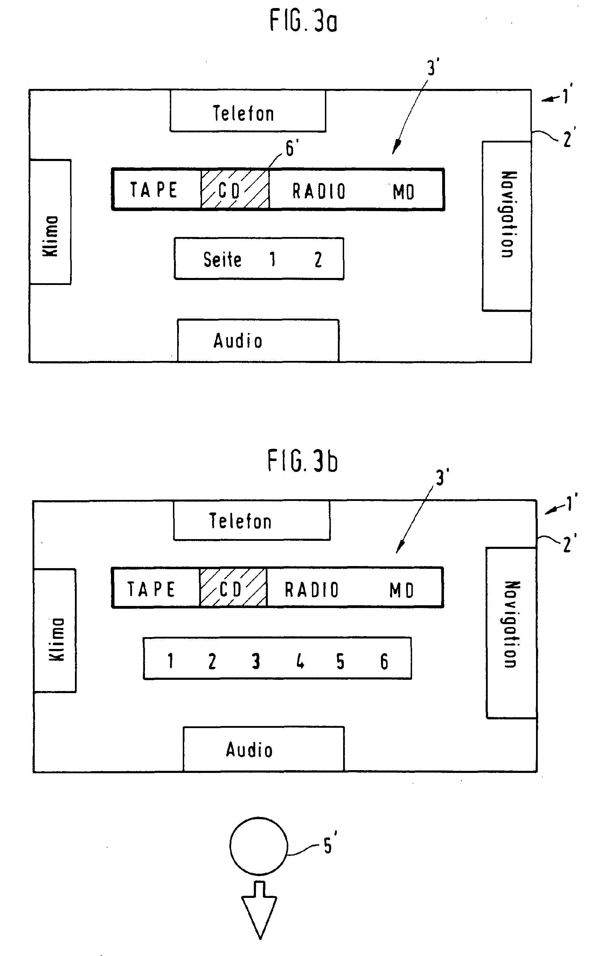

Durch Bewegen des Betätigungsglieds 5' nach unten kommt man von dem in Fig. 3b aktiven Untermenü (Tape, CD, Radio, MD) in das zu dem Untermenüpunkt "CD" gehörende Untermenü (Zahlen 1, 2, 3, 4, 5, 6). Nun kann man durch Verschieben des Betätigungsglieds 5' nach links oder rechts eine entsprechend andere CD auswählen und diese durch die Enter-Funktion (Drücken des Betätigungsglieds 5') auswählen.

Alternativ kann eine Auswahl in dieser Ebene auch durch Drehen des Betätigungsglieds 5' erfolgen. Auf eine jeweilige Ausführungsform sollte man sich dabei bei der Konstruktion des Systems festlegen.

Auch von dem in Fig. 3c als aktiv dargestellten Untermenü (Zahlen 1, 2, 3, 4, 5, 6) kann man nun durch ein- oder mehrmaliges Bewegen des Betätigungsgliedes 5' in Richtung einer der Hauptmenüpunkte zu einem jeweiligen Hauptmenüpunkt gelangen. Von der in Fig. 3c dargestellten Cursor-Position 6' gelangt man durch viermaliges Verschwenken nach rechts in den Hauptmenüpunkt "Navigation", durch zweimaliges Verschwenken nach oben in den Hauptmenüpunkt "Telefon", durch dreimaliges Verschwenken nach links in den Hauptmenüpunkt "Klima".

Erfolgt in einer alternativen Ausführungsform eine Auswahl der Untermenüpunkte im Untermenü 1, 2, 3, 4, 5, 6 durch Drehen des Betätigungsglieds 5', so kann eine Auswahl eines Hauptmenüpunkts durch einmaliges Verschwenken des Betätigungsgliedes 5' nach links oder rechts in "Klima" bzw. "Navigation" erfolgen.

Geht man aus einem Untermenüpunkt des Hauptmenüpunktes "Audio" durch die oben beschriebene Vorgehensweise in einen anderen Hauptmenüpunkt, beispielsweise "Navigation", was in Fig. 3d dargestellt ist, so wird ein dazu gehöriges Untermenü in dem Mittenbereich 3' der Anzeigefläche 1' dargestellt. Vorliegend wird bei einer Zielführung eine Adressliste (hier: verschiedene Straßen) aufgeführt, die wiederum entweder durch Betätigen des Betätigungsgliedes 5' nach oben oder unten oder Drehen des Betätigungsgliedes 5' ausgewählt und durch Drücken des Betätigungsgliedes 5' angewählt werden können. Aus dem in Fig. 3d dargestellten Untermenü kommt man dann wieder wie oben beschrieben zu weiteren Untermenüs bzw. zu Hauptmenüpunkten.

Insgesamt ist mit der vorliegenden Erfindung eine schnelle Auswahl aller Hauptmenü- und Untermenüpunkte möglich, wobei bei der Auswahl von Untermenüpunkten eine Kombination von Bewegungs- und Verdrehungsbetätigungen durchzuführen sind.

## Patentansprüche

1. Vorrichtung zur Steuerung einer Bildschirmanzeige mit einem Betätigungsglied, welches eine Ausgangslage besitzt und gegen die Wirkung eines elastischen Elements eine Bewegung in zumindest zwei Freiheitgraden durchführen kann sowie um eine Längsachse drehbar und in Richtung der Längsachse bewegbar ist, wobei
- bei der Bewegung des Betätigungsgliedes in Richtung eines der zumindest zwei Freiheitsgrade ein in einem Randbereich der Bildschirmanzeige fortwährend angeordneter und einem Punkt einer Menüstruktur zugeordneter Hauptmenüpunkt auswählbar ist,
- durch die Auswahl eines Hauptmenüpunktes ein diesem zugeordnetes, innerhalb der Menüstruktur untergeordnetes Teilmenü in dem vom Randbereich umfaßten Mittenbereich der Bildschirmanzeige erscheint,
- jeder Menüpunkt in den untergeordneten Teilmenüs jeweils durch eine Kombination von Bewegungen und Drehungen, umfassend jedoch wenigstens eine Bewegung in Richtung eines der zumindest zwei Freiheitsgrade, anfahrbar und als optisch hervorgehobenes Feld in der Bildschirmanzeige darstellbar ist und
- ein beliebiger Hauptmenüpunkt in jeder Menüposition durch ein- oder mehrmaliges Betätigen des Betätigungsgliedes in eine bestimmte Richtung eines der zumindest zwei Freiheitsgrade auswählbar ist.

2. Vorrichtung nach Anspruch 1,
dadurch gekennzeichnet,
daß eine Auswahl einer Funktion durch Betrieb des Betätigungsgliedes in Längsrichtung erfolgt.

3. Vorrichtung nach Anspruch 1 oder 2,
dadurch gekennzeichnet,
daß ein aktiver Hauptmenüpunkt hervorhoben ist.

4. Vorrichtung nach einem der vorhergehenden Ansprüche,
dadurch gekennzeichnet,
daß ein momentan aktiver und im Mittenbereich angezeigter Menüpunkt hervorhoben ist.
